# EUROPEAN PATENT SPECIFICATION

(11) **EP 0 595 040 B1**
(45) Date of publication and mention of the grant of the patent: **04.12.1996**
(21) Application number: 93115594.9
(22) Date of filing: 28.09.1993
(51) Int. Cl.: B29C 49/72, B29C 69/00

(54) **Method for fabricating a plastic drum and drum obtained thereby**
Verfahren zur Herstellung einer Kunststofftrommel und so erhaltene Trommel
Procédé de fabrication d'un tambour en matière plastique et tambour ainsi obtenu

(30) Priority: 29.10.1992 IT PN920082
(43) Date of publication of application: 04.05.1994
(73) Proprietor: ELECTROLUX ZANUSSI ELETTRODOMESTICI S.p.A., I-33170 Pordenone (IT); ARTESOPLA S.r.l., I-25024 Leno, Brescia (IT)
(72) Inventor: Durazzani, Piero, I-33080 Porcia, Pordenone (IT); Sacchiero, Giorgio, I-25024 Leno, Brescia (IT)
(74) Representative: Giugni, Valter

(56) References cited:
- EP-A- 0 103 419
- EP-A- 0 472 840
- US-A- 3 084 396
- US-A- 3 892 514
- US-A- 4 655 986

## Description

This invention relates to an improvement in a method for fabricating a plastic drum for clothes washing appliances, such as in particular washing machines of the household type, and the drum obtained thereby.

Washing machines, in particular of the front-loading type, are known in which the clothes to be washed, or the washload, are contained in appropriate perforated, ie. non-watertight, containers that are generally termed as "drums", which are manufactured according to various methods and consist essentially of a rigid structure formed by a front wall, a back plate and an outer cylindrical mantle.

These drums are then installed in an outer watertight container, generally termed "tub" and containing the washing liquor, and are suspended inside said tub by means of a mounting element with a radial structure, named spider journal, which supports said drum through a supporting shaft that doubles as driving shaft adapted to convey the rotary motion to the drum, said drum being routed through an appropriate sealed aperture provided in said tub.

Furthermore, on the inner side of the afore cited outer cylindrical mantle of the drum a number of vane-like elements, named "ribs", are usually provided in order to promote agitation of the washload in the drum.

Such drums are essentially fabricated using two types of manufacturing methods and related materials. The most traditional method consists of a cylindrical metal structure in which the two walls and the cylindrical mantle are made using stainless sheet-steel and appropriate fabrication processes therefor.

While quite reliable, this type of drums involves considerable fabrication and assembly costs, since each one of its component parts has to be fabricated separately, with the use of respective dies and equipment, and finally assembled.

A second, more recent type of drums consists of a structure made of plastic material obtained either by separately moulding two portions of drum and then joining these two portions together with the so-called "specular" welding technique, or a similar technique, or, as disclosed in the Italian patent application no. 45752/A/90 filed by one of the present applicants, with a method that comprises a first phase in which, by using an appropriate mould capable of moulding not only the structure of the drum, but also the related spider journal and ribs at the same time, the rigid structure of the drum is obtained by injection moulding the plastic material into the cavity of said mould in such an amount as to partially fill the portions of the mould cavities defined between a stationary plate and a moving plate of the mould, while the front wall of the drum is moulded separately and assembled later on.

In the described method, before the plastic material is injected into the appropriate mould cavities, the drum supporting shaft is introduced on a corresponding projection in the afore cited mould plate.

Such a method has the advantage of an obvious considerable simplification of the manufacturing process and a remarkable saving in material usage.

However, a still incomplete drum, ie. a drum that shall be further joined to its front wall through an additional assembly operation, is obtained with this method. Furthermore, the drum that is obtained in this way proves to be quite a delicate construction in practice, since the gravity and rotary stresses imparted by the driving shaft are transmitted to the drum structure through a spider journal of plastics that is shrink-fitted directly on said shaft and, due to the notorius fact that plastics are not very tough materials and therefore tend to become loosened quite easily, said plastic spider journal proves generally to be rather fragile and suited only to light-duty applications.

A rotating drum of plastic material for clothes washing machines is also known , as disclosed in the Italian patent application no. 6993/B/85, to be provided on one side with a coaxial supporting and driving shaft supported on the back side of the tub and, on the other side, with further supporting means of the rolling bearing type that are mounted between the drum and the tub.

Such an embodiment appears however to be quite difficult to be implemented in practice due to the fact that said interposed rolling support means, typically bearings, have the effect of acting as brakes and considerably retarding in this way the rotating motion of the drum at its high spinning speeds. Furthermore, said bearing means are quite likely to become soon damaged, since they are almost constantly submerged in the washing liquor, and their cost and assembly would inevitably put an additional, heavy burden on the production economics, while at the same time impairing the overall reliability of the tub/drum assembly.

A rotating drum of plastic material for top-loading clothes washing machines is also known , as disclosed in the Italian patent application no. 7048/B/85, to consist of a perforated cylindrical mantle, to which two corresponding head flanges are applied on both sides, said flanges being fastened to said mantle with techniques and methods that are well-known in the art.

Even such an approach has clear drawbacks due to the need of setting up three different moulds, producing the three component parts of the drum separately, and assembling them by means of such mechanical fasteners as rivets, bolts and/or tie-rods or screw-stays, which means a further operation that makes the production of the drum more complicated and its costs significantly higher.

It would therefore be desirable, and it is a purpose of the present invention, to use, for fabricating a plastic drum for clothes washing machines, in particular washing machines of the household type, a process that is able to do away with the above cited manufacturing complications, drawbacks and additional costs, while being capable, through the use of normally available techniques, of accomplishing in a fully reliable, effective way its task of containing and agitating the washload without undergoing constructional complications or constraints.

The invention will be further described below by way of non-limiting example with reference to the accompanying drawings, in which:
- Figure 1 is a sectional view taken along the axis of the drum according to the present invention;
- Figure 2 is a cross-section of said drum according to the present invention, with respect to its axis;
- Figure 3 is a second sectional view taken on a plane passing across the axis of the drum and on a particular point of the cylindrical mantle;
- Figure 4 is an enlarged detail of a section which is orthogonal to the axis of the drum and passing across one of its outer perforations;
- Figure 5 is a schematical view of a phase of the process according to the present invention.

With reference to the above listed Figures, the process according to the present invention consists of two phases, of which the first phase is used to make a complete drum 1, entirely made of plastics and in a single piece with the blow moulding technique.

In order to obtain the perforations to be provided for the passage of the washing liquor therethrough, on the cylindrical mantle of the drum a plurality of blind holes 2 are embossed during the same blow moulding phase, said blind holes being projecting outwards and closed by respective caps 3.

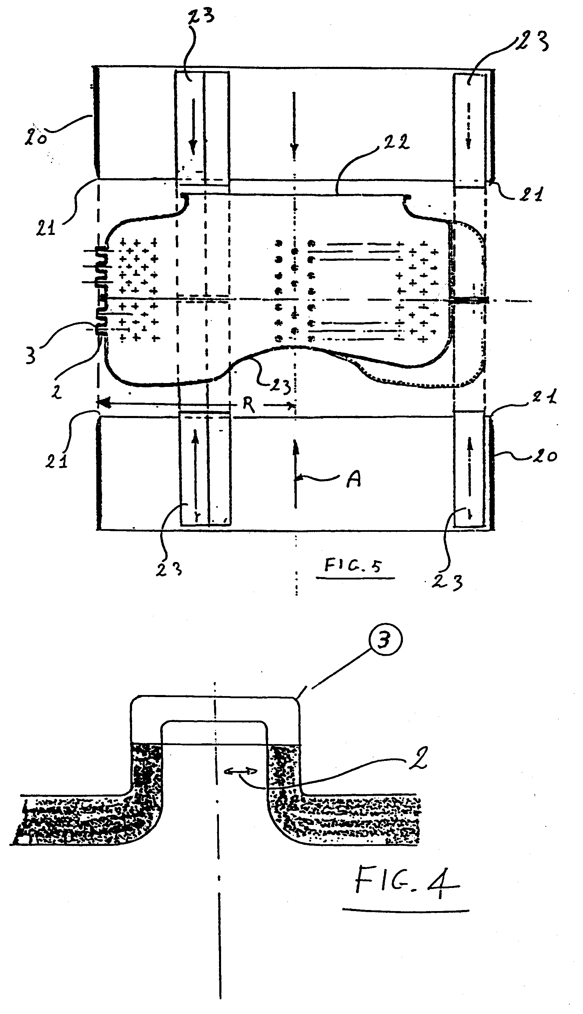

After having formed in this way the drum with the blow moulding technique, the second phase of the process is started, in which said caps 3 are cut off by means of a surface spot-facing operation, as shown schematically in Figure 5. Such an operation consists in cutting away said caps 3 by means of one or, preferably, two cylindrical blades 20 having a radius R that is equal to the radius from the axis A of the drum to the cutting section of said caps, said blades being arranged so as their cutting edge 21 is able to cut into the desired cutting zone with a motion that is parallel to the axis of the drum.

Said cylindrical blades 20 can consists of two substantially similar blades that are arranged on the opposite sides of the drum, ie. one facing the front opening 22 and the other one facing the back plate 24 of the drum.

When the blades and the drum are arranged in a correct relative position, said second phase of the process is actually started which consists in clamping the drum to lock it in its final position so as to prevent it from moving during the cutting operation, thereby giving rise to undesired burrs and distortions.

Such a clamping of the drum may be performed in a variety of ways. However, a preferred way provides for the drum being clamped by first allowing a plurality of flange-holding cylinders 23 , which are associated to both said blades and capable of moving coaxially with the same blades, to tighten with a symmetrical movement against appropriate flanges 7 that are arranged on the cylindrical mantle of the drum and which will be described more closely further on.

Having in this way locked the drum in position, said cutting or spot-facing operation is then performed by allowing said blades 20 to symmetrically slide forward along their axis, which coincides with the axis A of the drum, so that each cutting edge 21 will progressively dissect and remove all of the caps 3 being juttingly formed on the corresponding portion with respect to the plane of the flanges 7.

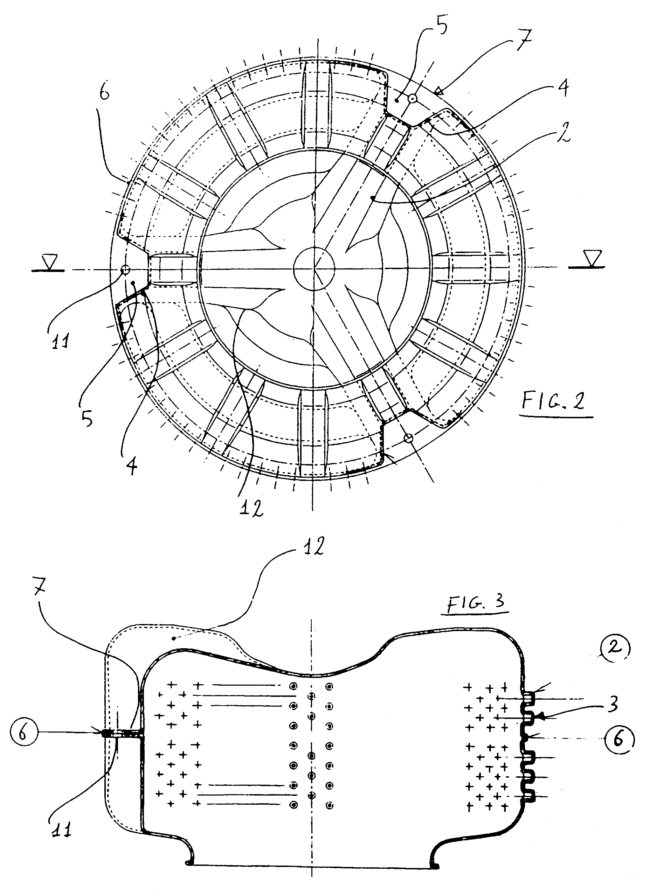

It has been found that this process enables said caps to be cut off without giving rise to burrs or similar cutting imperfections that may prove damaging for the clothes to be contained in the drum, owing to both the depth of the perforations and the fact that said cutting action takes place exactly in correspondence of the junction of said caps 3, as it is best shown in Figure 4.

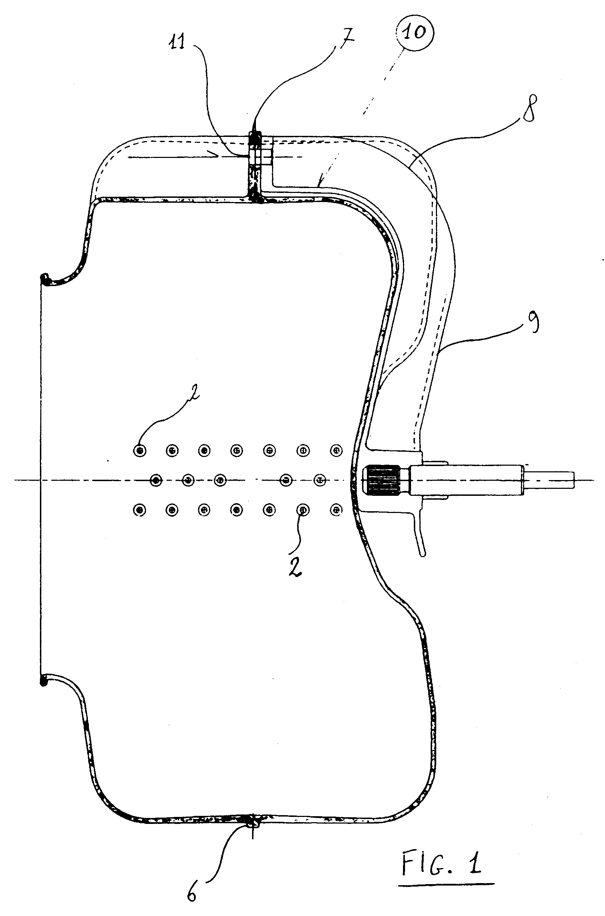

In view of making a most efficient use of the blow moulding process, the required ribs 4 are moulded integrally with the drum by forming appropriate trapezoidally shaped depressions on the cylindrical surface of the drum, as shown in Figure 2.

Such a particular shaping of the ribs gives two distinct advantages at the same time: the first one of these advantages results from the fact that said depressions formed on the outer cylindrical surface of the drum extend further on through corresponding recesses 12 projecting radially from the centre of the back plate of the drum toward the respective depressions 5 on said cylindrical surface. Said recesses 12, as seen from the inside of the drum, appears to be as respective prominences protruding from said rear plate and continuing the profile of the corresponding ribs.

Said advantage derives from the fact that, during the rotation of the drum, the washing liquor, instead of slipping off along the sides of traditionally shaped ribs, finds in this case its way practically obstructed by said recesses 12 and, as a consequence, is lifted up to a certain height before being allowed to fall back into the bottom portion of the drum, so that a continuous mill-wheel effect is in this way obtained, producing a cascade of washing liquor down onto the bottom of the drum, and against the clothes contained therein, thereby improving the washing effectiveness.

The second one of the two above cited advantages derives from the fact that said drum is provided with a peripheral rim 6 projecting from the outer portion, in particular from the front outer portion of the cylindrical mantle near the front loading opening, so as to strengthen the structure and enable it to appropriately stand the highest dynamic and load stresses that may be encountered under operating conditions.

Said peripheral rim extends inwardly by taking the form of a substantially trapezoidally shaped, plane flange 7 when it runs over and into said depressions 5.

By appropriately taking advantage of this circumstance, a spider journal 8 is created, the radial arms 9 of which embrace said drum with extensions 10 that are an integral part of said arms, are located at the respective ends thereof, and are inserted into said depressions 5 up to the respective flanges 7, to which they are fastened in a very simple and convenient way with widely known means, said flanges being provided with appropriate holes in correspondence of the point of attachment to said extensions.

It will be now be appreciated that a further advantage is in this way derived from the present invention: as a matter of fact, it is in correspondence of the flanges 7 that the material of the drum assembly undergoes the highest stretching load, which is sustained by said peripheral rim that, as described above, is arranged in the front portion of the drum near the loading opening and, therefore, exactly in the portion sustaining the highest load, so that strain on the material is actually minimized.

Such a strengthening effect is improved if the thickness of said peripheral rim 6 is increased, for instance to a thickness which is twice as much as the wall thickness of the drum.

It will of course be appreciated that these drums may be given any appropriate form to comply with differing space constraints and specific drum volume requirements, and may therefore be made also to forms or shapes that differ from the one illustrated here by way of example, without departing from the scope of the present invention.

## Claims

1. Process for fabricating a perforated drum (1) for clothes washing machines consisting of an outer cylindrical mantle, a rear plate and an open front wall, and supported by a spider journal, characterized in that it is performed in at least two distinct phases, wherein the first one of these phases consists in forming the drum comprising a plurality of blind holes (2) arranged on the outer cylindrical mantle of the drum by the blow moulding technique, and wherein a subsequent phase consists in opening said blind holes by removing the caps (3) that close the respective blind holes, said phase of opening said blind holes being performed by cutting off said caps (3), said cutting off operation consists in dissecting said caps by means of one or more cylindrical blades (20, 21) having a radius (R) equal to the distance from the axis (A) of the drum and the cutting section of the caps, said blades being arranged coaxially with respect to the axis of the drum and being driven so as to move parallelly thereto.

2. Process according to claim 1, **characterized in that** the drum is immobilized before the cutting phase to remove said caps (3) is started.

3. Process according to claim 2, **characterized in that** such a clamping to immobilize the drum is performed by allowing a plurality of flange-holding cylinders (23) associated to both said blades, and adapted to move coaxially with said blades, to tighten with a symmetrical movement against corresponding flanges (7) that are provided on the cylindrical surface of the drum.

4. Drum produced with the process according to any of the preceding claims from 1 to 3, **characterized in that** its cylindrical mantle is formed so as to create a plurality of re-entering ribs (4).

5. Drum according to claim 4, **characterized in that** said ribs are substantially trapezoidal in their shape.

6. Drum according to claim 5, **characterized in that** each rib is formed by a corresponding depression (5) provided on the outside of the cylindrical mantle of the drum.

7. Drum according to claim 6, **characterized in that** said depressions (5) extend into corresponding recesses (12) projecting radially from the centre of the rear plate of the drum toward the respective depressions, and that said recesses (12) form inside the drum respective prominences protruding from the rear plate of the drum.

8. Drum according to any of the preceding claims, **characterized in that** it is provided with a peripheral rim (6) protruding from the outer cylindrical mantle, and that said peripheral rim has a thickness which is larger than the wall thickness of the drum.

9. Drum according to claim 8, **characterized in that** said peripheral rim (6) is situated on the outer front portion of the drum.

10. Drum according to claim 8 or 9, **characterized in that** said peripheral rim extends into said depressions (5) and takes there the form of a substantially trapezoidal, plane flange (7).

11. Drum according to claim 10, **characterized in that** said plane flanges (7) are provided with perforations (11) in their portion near their outer edge.

12. Drum according to claim 10 or 11, **characterized in that** said spider journal is formed by a plurality of radial arms (9) inserted in said recesses (12) and extending with respective extensions (10) that are accomodated in said depressions (5).

13. Drum according to claim 12, **characterized in that** said extensions (10) terminate in correspondence of the respective flanges (7) to which they are connected through said perforations (11).

## Patentansprüche

1. Verfahren zur Herstellung einer perforierten Trommel (1) für Waschmaschinen für Wäsche, bestehend aus einem äußerem zylindrischen Mantel, einer Rückplatte und einer offenen Vorderwand und gestützt von einem Spinnenzapfen, **dadurch gekennzeichnet, daß** es in mindestens zwei verschiedenen Phasen durchgeführt wird, wobei die erste dieser Phasen darin besteht, daß die Trommel mit einer Vielzahl von Blindbohrungen (2) geformt wird, die auf dem äußeren zylindrischen Mantel der Trommel mittels Blasformverfahren angeordnet werden, und wobei eine nachfolgende Phase im Öffnen der Blindbohrungen durch Entfernen der Kappen (3) besteht, die die entsprechenden Blindbohrungen verschließen, und wobei die Phase des Öffnens der Blindbohrungen durch das Abschneiden dieser Kappen (3) erfolgt, wobei das Abschneiden darin besteht, diese Kappen durch eine oder mehrere zylindrische Klingen (20, 21) mit einem Radius (R), der der Entfernung von der Achse (A) der Trommel zu dem Schnittbereich der Kappen entspricht, zu zerlegen, und die Klingen koaxial zur Trommelachse angeordnet sind und so angetrieben werden, daß sie sich parallel dazu bewegen.

2. Verfahren gemäß Anspruch 1, **dadurch gekennzeichnet, daß** die Trommel unbeweglich angebracht wird, ehe die Schneidphase zum Entfernen der Kappen (3) beginnt.

3. Verfahren gemäß Anspruch 2, **dadurch gekennzeichnet, daß** ein solches Festklemmen der Trommel erfolgt, indem sie mit Hilfe einer Vielzahl von Flanschhaltezylindern (23), die zu beiden Klingen gehören und sich koaxial zu ihnen bewegen können, durch eine symmetrische Bewegung fest gegen entsprechende Flansche (7), die auf dem zylindrischen Mantel der Trommel angeordnet sind, gepreßt und somit festgeklemmt wird.

4. Trommel, hergestellt nach dem Verfahren gemaß einem der vorstehenden Ansprüche von 1 bis 3, **dadurch gekennzeichnet, daß** ihr zylindrischer Mantel so geformt ist, daß er eine Vielzahl von Wiedereintritts-Rippen (4) schafft.

5. Trommel gemäß Anspruch 4, **dadurch gekennzeichnet, daß** die Rippen im wesentlichen trapezförmig sind.

6. Trommel gemäß Anspruch 5, **dadurch gekennzeichnet, daß** jede Rippe durch eine entsprechende Vertiefung (5) außen auf dem zylindrischen Mantel der Trommel gebildet wird.

7. Trommel gemäß Anspruch 6, **dadurch gekennzeichnet, daß** die Vertiefungen (5) sich in entsprechende Einlassungen (12) hinein erstrecken, die von der Mitte der Trommelrückplatte zu den entsprechenden Vertiefungen hervorstehen, und die Einlassungen (12) im Inneren der Trommel entsprechende Vorsprünge bilden, die aus der Rückplatte der Trommel hervorstehen.

8. Trommel gemäß einem der vorstehenden Ansprüche, **dadurch gekennzeichnet, daß** sie einen aus dem äußeren zylindrischen Mantel nach außen hervorstehenden Außenrand (6) aufweist und der Außenrand eine Dicke hat, die größer ist als die Wanddicke der Trommel.

9. Trommel gemäß Anspruch 8, **dadurch gekennzeichnet, daß** sich der Außenrand auf dem äußeren Frontabschnitt der Trommel befindet.

10. Trommel gemäß Anspruch 8 oder 9, **dadurch gekennzeichnet, daß** sich der Außenrand in die Vertiefungen (5) hinein erstreckt und dort die Form eines im wesentlichen trapezförmigen, ebenen Flansches (7) annimmt.

11. Trommel gemäß Anspruch 10, **dadurch gekennzeichnet, daß** die ebenen Flansche (7) Perforationen (11) in ihrem Abschnitt nahe ihrer Außenkante aufweisen.

12. Trommel gemaß Anspruch 10 oder 11, **dadurch gekennzeichnet, daß** der Spinnenzapfen durch eine Vielzahl von radialen Armen (9) gebildet wird die in die Einlassungen (12) eingeführt werden und entsprechende Verlängerungen (10) aufweisen, die in den Vertiefungen (5) aufgenommen werden.

13. Trommel gemäß Anspruch 12, **dadurch gekennzeichnet, daß** die Verlängerungen (10) zusammen mit den entsprechenden Flanschen (7) enden, mit denen sie über die Perforationen (11) verbunden sind.

## Revendications

1. Procédé de fabrication d'un tambour perforé **(1)** pour des machines à laver le linge, consistant en une enveloppe extérieure cylindrique, une plaque arrière et une paroi avant ouverte, et supporté par un palier en étoile, caractérisé en ce qu'il est réalisé en au moins deux phases distinctes, la première de ces phases consistant à former le tambour comprenant une pluralité de trous borgnes **(2)** agencés sur l'enveloppe extérieure périphérique du tambour par la technique d'extrusion-soufflage, et une phase subséquente consistant à ouvrir lesdits trous borgnes en retirant les capuchons **(3)** qui ferment les trous borgnes respectifs, ladite phase d'ouverture desdits trous borgnes étant effectuée en coupant lesdits capuchons **(3)**, ladite opération de coupe consistant à séparer lesdits capuchons au moyen d'une ou plusieurs lames cylindriques **(20, 21)** ayant un rayon **(R)** égal à la distance depuis l'axe **(A)** du tambour et la section de coupe des capuchons, lesdites lames étant agencées de manière coaxiale par rapport à l'axe du tambour et étant entraînées de manière à se déplacer parallèlement à lui.

2. Procédé selon la revendication 1, caractérisé en ce que le tambour est immobilisé avant que commence la phase de coupe pour retirer lesdits capuchons **(3)**.

3. Procédé selon la revendication 2, caractérisé en ce qu'un tel serrage pour immobiliser le tambour est réalisé en permettant à une pluralité de cylindres de maintien de bride **(23)** associés aux deux dites lames, et adaptés pour se déplacer de manière coaxiale auxdites lames, afin de serrer par un mouvement asymétrique contre des brides correspondantes **(7)** qui sont prévues sur la surface cylindrique du tambour.

4. Tambour produit par le procédé selon l'une quelconque des revendications précédentes 1 à 3, caractérisé en ce que son enveloppe cylindrique est formée en sorte de créer une pluralité de membrures rentrantes **(4)**.

5. Tambour selon la revendication 4, caractérisé en ce que lesdites membrures sont de forme substantiellement trapézoïdale.

6. Tambour selon la revendication 5, caractérisé en ce que chaque membrure est formée par un renfoncement correspondant **(5)** prévu sur l'extérieur de l'enveloppe cylindrique du tambour.

7. Tambour selon la revendication 6, caractérisé en ce que lesdits renfoncements **(5)** s'étendent dans des renfoncements correspondants **(12)** formant saillie radiale depuis le centre de la plaque arrière du tambour en direction des renfoncements respectifs, et en ce que lesdits renfoncements **(12)** forment à l'intérieur du tambour des proéminences respectives formant saillie depuis la plaque arrière du tambour.

8. Tambour selon l'une quelconque des revendications précédentes, caractérisé en ce qu'il est muni d'une couronne périphérique **(6)** formant saillie depuis l'enveloppe extérieure cylindrique, et en ce que ladite couronne périphérique a une épaisseur qui est plus large que l'épaisseur de paroi du tambour.

9. Tambour selon la revendication 8, caractérisé en ce que ladite couronne périphérique **(6)** est située sur la partie extérieure avant du tambour.

10. Tambour selon la revendication 8 ou 9, caractérisé en ce que ladite couronne périphérique s'étend dans lesdits renfoncements **(5)** et y prend la forme d'une bride plane **(7)** substantiellement trapézoïdale.

11. Tambour selon la revendication 10, caractérisé en ce que lesdites brides planes **(7)** sont munies de perforations **(11)** dans leur partie proche de leur bord extérieur.

12. Tambour selon la revendication 10 ou 11, caractérisé en ce que ledit palier en étoile est formé par une pluralité de bras radiaux **(9)** insérés dans lesdits renfoncements **(12)** et s'étendant par des extensions respectives **(10)** qui sont logées dans lesdits renfoncements **(5)**.

13. Tambour selon la revendication 12, caractérisé en ce que lesdites extensions **(10)** se terminent en coïncidence avec les brides respectives **(7)** auxquelles elles sont reliées à travers lesdites perforations **(11)**.
